(19) Europäisches Patentamt
European Patent Office
Office européen des brevets

(11) Veröffentlichungsnummer: **0 162 360**
**B1**

# (12) EUROPÄISCHE PATENTSCHRIFT

(45) Veröffentlichungstag der Patentschrift: **29.06.88**

(51) Int. Cl.⁴: **F 16 G 15/02**

(21) Anmeldenummer: **85105454.4**

(22) Anmeldetag: **04.05.85**

(54) **Kettenverbindungsglied für Rundstahlketten, insbesondere für im Bergbau einsetzbare Förder- oder Zugketten.**

(30) Priorität: **17.05.84 DE 3418263**
**17.05.84 DE 8415008 U**

(43) Veröffentlichungstag der Anmeldung: **27.11.85 Patentblatt 85/48**

(45) Bekanntmachung des Hinweises auf die Patenterteilung: **29.06.88 Patentblatt 88/26**

(84) Benannte Vertragsstaaten: **AT BE DE FR GB IT NL**

(56) Entgegenhaltungen:
**WO-A-83/02653**
**DE-A-3 044 225**
**DE-U-6 913 812**
**FR-A-933 961**
**US-A-2 353 939**
**US-A-2 353 940**

(73) Patentinhaber: **Firma August Thiele, Werkstrasse 3, D-5860 Iserlohn- Kalthof (DE)**

(72) Erfinder: **Der Erfinder hat auf seine Nennung verzichtet**

(74) Vertreter: **Schwarz, Klaus- Jürgen, Dipl.- Ing., Adenauerallee 46a, D-5300 Bonn 1 (DE)**

EP 0 162 360 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft ein Kettenverbindungsglied für Rundstahlketten nach dem Oberbegriff des Anspruches 1, das insbesondere für im Bergbau einsetzbare Förder- oder Zugketten bestimmt ist.

Der praktische Einsatz derartiger Kettenverbindungsglieder und Prüfungen auf Bruchfestigkeit haben gezeigt, daß die ineinandergreifenden Innen- und Außenschenkel der beiden Gliedhälften insbesondere im Bereich des sie quer durchsetzenden Verriegelungskeils in hohem Maße auf Flächenpressung und Zug beansprucht werden, so daß die Außenschenkel der beiden Gliedhälften sich nach außen aufbiegen und schließlich im Bereich des geringsten Querschnittes, der sich in der Regel am Übergang von den Schenkeln zu dem endseitigen Bügelabschnitt befindet, zu Bruch gehen und von dem Bügelteil abreißen. Auch die Innenschenkel unterliegen ähnlich hohen Belastungen und sind in gleicher Weise bruchgefährdet.

Um das Aufbiegen der Außenschenkel zu vermeiden, weist zwar bei einem derartigen bekannten Kettenverbindungsglied für Rundstahlketten (FR-A-933 961) der Außenschenkel jeder Gliedhälfte eine in Kettenzugrichtung gegen die andere Gliedhälfte hervorspringende stegförmige Verriegelungsnase auf, die nach Art einer Feder in eine gegenüberliegende Nut an der anderen Gliedhälfte hineinragt und mit einer zur Kettenzugrichtung im wesentlichen parallelen äußeren Anlagefläche an der Außenwand der Nut abgestützt ist. Durch diese in Kettenzugrichtung hervorspringende Verriegelungsnase erfährt jedoch jede Gliedhälfte im Bereich des ohnehin bruchgefährdeten Überganges von dem Innenschenkel zu dem Bügelabschnitt eine zusätzliche Schwächung, was zu einem vorzeitigen Bruch führen kann.

Dieses bekannte Kettenverbindungsglied hat zwar auch einen im Querschnitt ovalen flachen Verriegelungskeil, der durch einen ihn quer durchsetzenden Sicherungsstift zwischen den beiden Innenschenkeln des Kettenverbindungsgliedes festgelegt ist. Dieser Verriegelungskeil ist jedoch im rechten Winkel quer zur Kettenzugrichtung zwischen den Schenkeln der beiden Gliedhälften angeordnet, so daß er alle auftretenden Querkräfte aufnehmen muß. Dies ist aber auch insofern problematisch, als durch das zum Eintreiben des Verriegelungskeils vorgesehene Spiel im Keilloch eine geringe seitliche Bewegung zwischen den ineinandergreifenden Innen- und Außenschenkeln der beiden Gliedhälften unvermeidbar ist, wobei noch hinzukommt, daß das Einführen des Verriegelungskeils durch ein seitliches Verrutschen der lose ineinandergefügten beiden Gliedhälften erschwert werden kann. Auch bei derartigen Kettenverbindungsgliedern sind daher insbesondere die Außenschenkel beider Gliedhälften nicht ausreichend gegen Aufbiegen und Bruch gesichert.

Um den Verriegelungskeil von den an ihm angreifenden hohen Belastungen zu entlasten, weisen zwar bei einem anderen bekannten Kettenverbindungsglied für Rundstahlketten (US-A-2 353 939) die ineinandersteckbaren beiden Gliedhälften an den gegenüberliegenden Flächen ihrer formschlüssig ineinandergreifenden Innen- und Außenschenkel quer zur Kettenzugrichtung hakenförmig ineinandergreifende Vorsprünge und Aussparungen auf. Beide Gliedhälften sind jedoch nur durch einen die Innen- und Außenschenkel quer durchsetzenden dünnen Sicherungsstift miteinander verbunden, so daß bei dieser Ausführungsform die bei einer Belastung des Kettenverbindungsgliedes auftretenden hohen Kettenzugkräfte hauptsächlich von den ineinandergreifenden hakenförmigen Vorsprüngen an den beiden Gliedhälften aufgenommen werden müssen. Gerade im Bereich dieser ineinandergreifenden hakenförmigen Vorsprünge und Aussparungen ist jedoch der Faserverlauf an den im Gesenk geschmiedeten Gliedhälften unterbrochen, so daß diese Stellen bei dynamischer Belastung derartiger Kettenverbindungsglieder ebenfalls in besonders hohem Maße dauerbruchgefährdet sind.

Da die hakenförmigen Verbindungen der beiden Gliedhälften dieses bekannten Kettenverbindungsgliedes quer zur Kettenzugrichtung ineinandergreifen, können die beiden Gliedhälften außerdem nur quer zur Kettenzugrichtung von ihren Flachseiten her ineinandergesteckt werden, was insbesondere beim Verbinden der Enden von unter Zug stehenden Kettenabschnitten Schwierigkeiten bereiten kann. Erst anschließend kann der Verriegelungsstift in die die Innen- und Außenschenkel der beiden Gliedhälften durchsetzende Querbohrung eingetrieben werden.

Aus der DE-A-3 201 840 und aus der deutschen Gebrauchsmusterschrift DE-U-6 913 812 sind zwar weiterhin Kettenverbindungsglieder mit einem die beiden Gliedhälften schräg durchsetzenden Sicherungsstift bekannt. Bei dem Kettenverbindungsglied nach der DE-A-3 201 840 ragt jedoch von dem Innenschenkel jeder der beiden Gliedhälften ein zur Seite gerichteter Querzapfen in eine entsprechende Öffnung am Außenschenkel der jeweils anderen Gliedhälfte hinein, so daß die beiden Glidhälften nur quer zur Kettenzugrichtung seitlich ineinandergeschoben werden können und durch einen zusätzlichen Mittelsteg in Kettenzugrichtung zusammengehalten werden müssen. Der Sicherungsstift hat keine tragende Funktion und dient nur dem Zusammenhalt der drei Teile dieses bekannten Kettenverbindungsgliedes. Nachteilig ist auch der zusätzliche Mittelsteg, der bei der Demontage derartiger Kettenverbindungsglieder leicht verloren gehen kann. Die Beanspruchungen der beiden Gliedhälften dieses Kettenverbindungsgliedes sind mit den Beanspruchungen bei Kettenverbindungsgliedern mit nur zwei etwa J-förmig ausgebildeten identischen Gliedhälften, die mit den Innen- und Außenschenkeln ihrer beiden Gliedhälften jeweils flach aneinanderliegen, nicht vergleichbar.

Dies gilt auch für das aus der deutschen Gebrauchsmusterschrift DE-U-6 913 812 bekannte Kettenverbindungsglied, bei dem die beiden Kettengliedhälften zwar an den Innen- bzw. Außenseiten ihrer Schenkel jeweils aneinanderliegen, jedoch zwischen ihren beiden Innenschenkeln durch ein ringförmiges Einsatzstück aus Kunststoff im Abstand gehalten sind. Bei diesem vorbekannten Kettenschloß sind darüber hinaus auch die Trennebenen zwischen den Schenkeln der beiden Gliedhälften gegenüber der Kettenzugrichtung derart schräggestellt, daß sie praktisch rechtwinklig zu dem ebenfalls schräggestellten Verbindungsstift angeordnet sind, so daß auf den Verbindungsstift reine Abscherkräfte wirken und durch die Schrägstellung des Verbindungsstiftes keine Verbesserung des Zusammenhaltes zwischen den beiden Gliedhälften des Kettenschlosses erreicht wird.

Der Erfindung liegt die Aufgabe zugrunde, die gegenseitige Verbindung und insbesondere den formschlüssigen gegenseitigen Eingriff der beiden Gliedhälften des Kettenverbindungsgliedes nach dem Oberbegriff des Anspruches 1 dahingehend zu verbessern, daß die aneinanderliegenden Außen- und Innenschenkel beider Gliedhälften gegen seitliches Aufbiegen auch bei höchsten Belastungen besser und ausreichend gesichert sind.

Diese Aufgabe wird erfindungsgemäß durch den Kennzeichnungsteil des Anspruches 1 gelöst, während in den Ansprüchen 2 bis 8 besonders vorteilhafte Weiterbildungen der Erfindung gekennzeichnet sind.

Durch die Erfindung ergibt sich eine verbesserte Verriegelung der formschlüssig ineinandergreifenden Innen- und Außenschenkel der beiden Gliedhälften derartiger Kettenverbindungsglieder. Durch die Schrägstellung des Verriegelungskeils wird bei Belastung ein Abrutschen der Außenschenkel vom Keil vermieden, wobei durch den schräggestellten Verriegelungskeil im Gegensatz zu den bekannten Ausführungsformen ein Teil der hohen Zugspannungen bei der Belastung vom inneren Schenkel auf den äußeren Schenkel jeder der beiden Gliedhälften übertragen wird, so daß von einer bestimmten Schrägstellung des Verriegelungskeils ab, und zwar schon bei etwa 3° bis 5° beginnend, die bekannte endseitige Verriegelung der Außenschenkel der beiden Gliedhälften durch von den Außenschenkeln in entsprechende Nuten an der jeweils gegenüberliegenden Gliedhälfte eingreifende endseitige Verriegelungsnasen weitgehend überflüssig wird. Ein Abrutschen der Außenschenkel der beiden Gliedhälften von dem schräggestellten Verriegelungskeil ist bei Belastung des Kettenverbindungsgliedes nicht mehr möglich. Die Schrägstellung des Verriegelungskeils in einem Winkelbereich zwischen 3° und vorzugsweise etwa 5° und etwa 15° eröffnet dabei entsprechend den vorhandenen Materialquerschnitten einen ausreichenden Spielraum, um die Schrägstellung des Verriegelungskeils auch unter höchsten Belastungen sicherzustellen.

Besonders vorteilhafte Ergebnisse lassen sich weiterhin erzielen, wenn der Außenschenkel jeder Gliedhälfte und der daran anliegende Innenschenkel der jeweils anderen Gliedhälfte durch eine in der Ebene des Verriegelungskeils im wesentlichen in Kettenzugrichtung sich erstreckende Feder- und Nutverbindung formschlüssig miteinander verbunden sind. Der Verriegelungskeil muß dann die auftretenden Querkräfte nicht alleine aufnehmen. Die beiden Gliedhälften des Kettenverbindungsgliedes werden vielmehr durch die Feder- und Nutverbindung zwischen den aneinanderliegenden Innen- und Außenschenkeln beider Gliedhälften bereits in einer besonders einfachen und zuverlässigen Weise gegen seitliche Verschiebung gesichert, was sich insbesondere beim Zusammenschieben der beiden Gliedhälften und beim anschließenden Eintreiben des Verriegelungskeils in die durch die Feder- und Nutverbindung einwandfrei zur Deckung gebrachten Abschnitte des schräggestellten Keilloches vorteilhaft bemerkbar macht. Als weiterer Vorteil der Feder- und Nutverbindung kommt noch hinzu, daß der Querschnitt des inneren Schenkels beider Gliedhälften vergrößert werden kann, ohne die Anlagefläche des äußeren Schenkels der jeweils anderen Gliedhälfte zu verkleinern. Dadurch, daß der Außenschenkel jeder Gliedhälfte an seiner Innenseite eine in eine Nut am Innenschenkel der jeweils anderen Gliedhälfte eingreifende Feder aufweist, ergibt sich eine größere Auflagefläche für den Außenschenkel am Keil bei verringerter Flächenpressung, wobei auch an dem besonders dauerbruchgefährdeten Übergang zu dem Bügelteil eine Querschnittsvergrößerung erzielt wird, während die kreisbogenförmig auslaufenden Endabschnitte der Feder- und Nutverbindungen einen weitgehend ungestörten Faserverlauf an den beiden Gliedhälften gerade in den dauerbruchgefährdeten Bereichen ermöglichen.

Weitere Einzelheiten und Vorteile der Erfindung ergeben sich aus der folgenden Beschreibung von in der Zeichnung schematisch dargestellten bevorzugten Ausführungsbeispielen. Es zeigen

Fig. 1 ein erstes Kettenverbindungsglied in Ansicht auf die Flachseiten seiner ineinandergesteckten beiden Gliedhälften,

Fig. 2 einen Längsschnitt durch das Kettenverbindungsglied in Kettenzugrichtung entsprechend Schnittlinie II - II von Fig. 1,

Fig. 3 einen weiteren Schnitt durch das Kettenverbindungsglied gemäß Schnittlinie III - III von Fig. 1,

Fig. 4 eine Einzelansicht einer der beiden identischen Gliedhälften eines derartigen Kettenverbindungsgliedes,

Fig. 5 eine um 90° gedrehte Seitenansicht dieser Gliedhälfte in Richtung des Pfeiles V von Fig. 4,

Fig. 6 einen Schnitt durch diese Gliedhälfte gemäß Schnittlinie VI - VI von Fig. 4,

Fig. 7 ein zweites Kettenverbindungsglied in Ansicht auf die Flachseiten seiner ineinandergesteckten beiden Gliedhälften,

Fig. 8 einen Längsschnitt durch das zweite Kettenverbindungsglied in Kettenzugrichtung entsprechend Schnittlinie VIII - VIII von Fig. 7,

Fig. 9 einen weiteren Schnitt durch das Kettenverbindungsglied gemäß Schnittlinie IX - IX von Fig. 7,

Fig. 10 eine Einzelansicht einer der beiden identischen Gliedhälften eines derartigen Kettenverbindungsgliedes,

Fig. 11 eine um 90° gedrehte Seitenansicht dieser Gliedhälfte in Richtung des Pfeiles XI - XI von Fig. 10,

Fig. 12 einen Schnitt durch diese Gliedhälfte gemäß Schnittlinie XII - XII von Fig. 10 und

Fig. 13 eine Ansicht eines gegenüber Fig. 7 bis 12 weiter abgewandelten Kettenverbindungsgliedes.

Jedes der gezeigten Kettenverbindungsglieder 1, 11, 21 hat zwei formschlüssig ineinandergreifende gleiche Gliedhälften 2, 12, 22 von denen jede aus einem Bügel 3, 13, 23 mit einem Innenschenkel 4, 14, 24 und einem dazu in Kettenzugrichtung 20 etwa parallelen Außenschenkel 5, 15, 25 besteht. Beide Gliedhälften 2, 12, 22 sind durch einen die ineinandergesteckten Außenschenkel 5, 15, 25 und Innenschenkel 4, 14, 24 durchsetzenden Verriegelungskeil 6, 16, 26 mit einem ovalen Querschnitt fest miteinander verbunden. Die Innenschenkel 4, 14, 24 beider Gliedhälften 2, 12, 22 liegen in Kettenzugrichtung 20 bzw. parallel dazu unmittelbar aneinander und nehmen zwischen sich einen den Verriegelungskeil 6, 16, 26 quer durchsetzenden Sicherungsstift 7, 17, 27 in den beiden Hälften 7a, 17a, 27a einer Querbohrung zwischen sich auf.

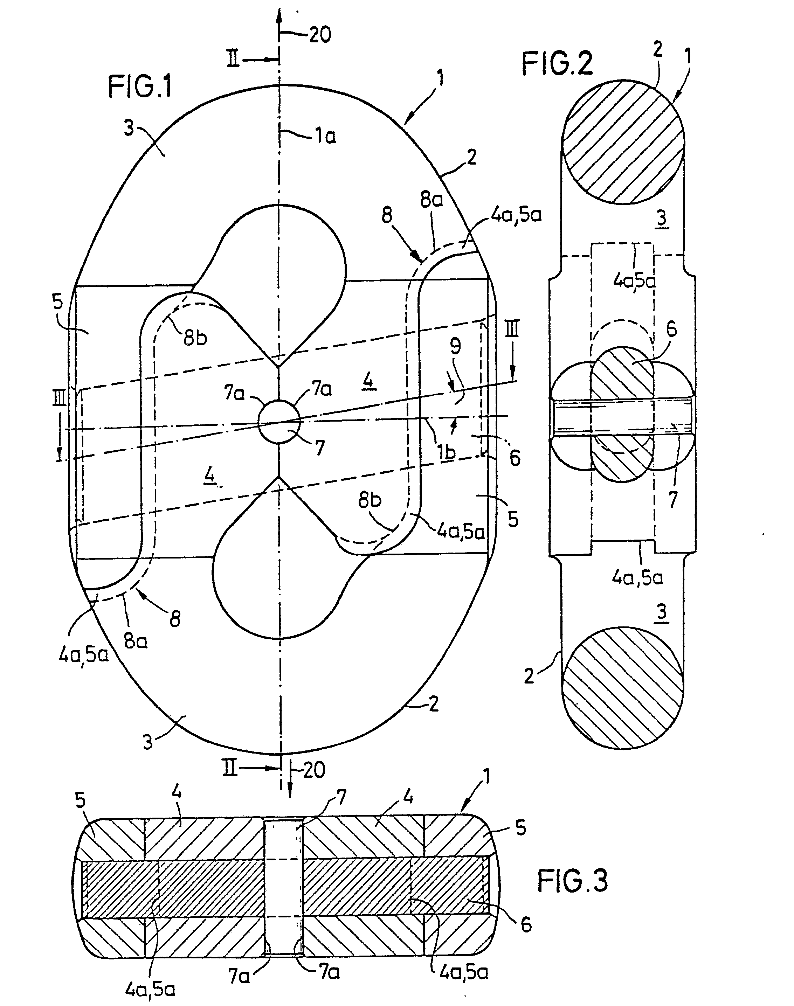

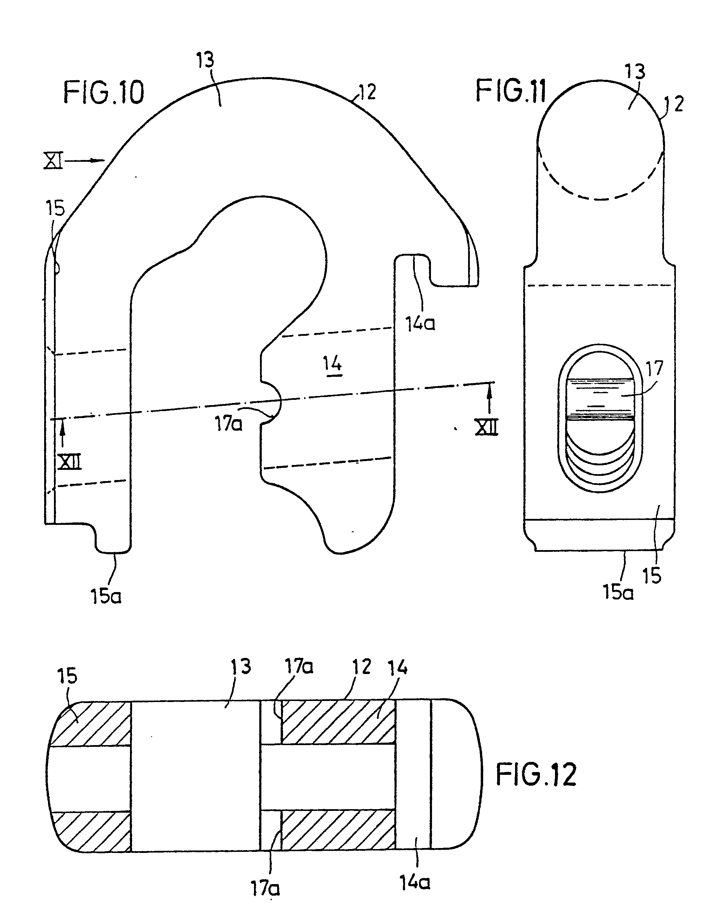

Wie insbesondere in Fig. 1, 3, 7, 10 und 13 zu erkennen ist, ist der Verriegelungskeil 6, 16, 26 des Kettenverbindungsgliedes 1, 11, 21 entgegen der Kettenzugrichtung 20 zu den Außenschenkeln 5, 15, 25 der beiden Gliedhälften 2, 12, 22 hin schräggestellt, wobei die Schrägstellung 9, 19, 29 des Verriegelungskeils 6, 16, 26 mindestens 3°, vorzugsweise jedoch zwischen etwa 5° und etwa 15° gegenüber der Querachse 1b, 11b, 21b des Kettenverbindungsgliedes 1, 11, 21 beträgt.

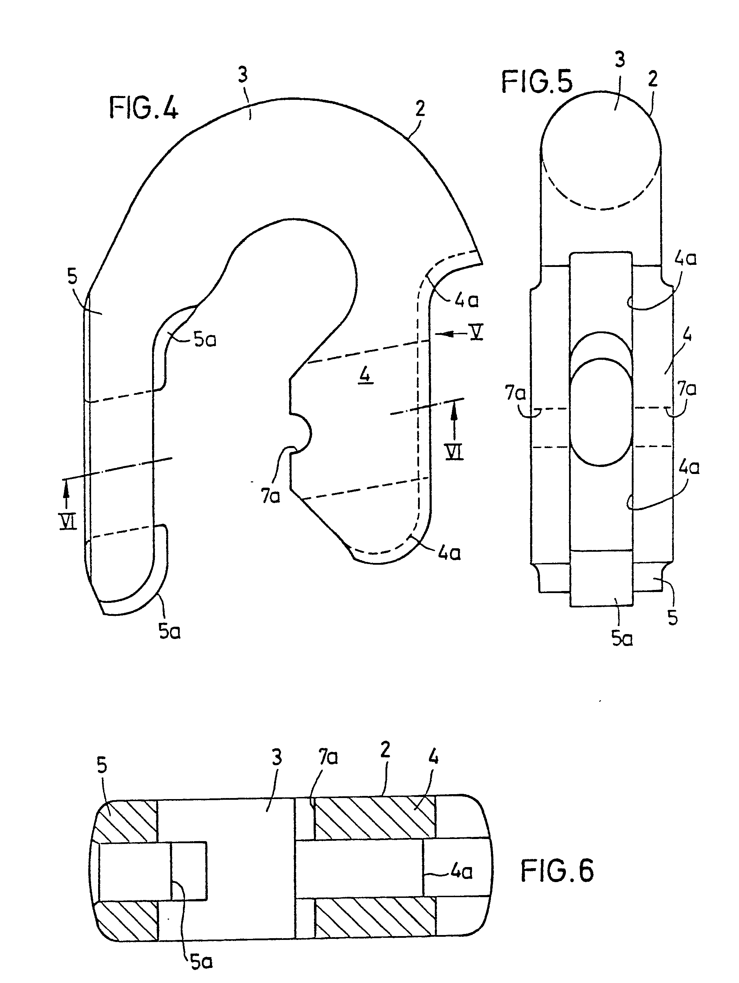

Wie in Fig. 1 bis 6 weiterhin zu erkennen ist, sind bei dem ersten Kettenverbindungsglied 1 der Außenschenkel 5 jeder Gliedhälfte 2 und der daran anliegende Innenschenkel 4 der jeweils anderen Gliedhälfte 2 durch eine in der Ebene des Verriegelungskeils 6 im wesentlichen in Kettenzugrichtung 20 sich erstreckende Feder- und Nutverbindung 8 formschlüssig miteinander verbunden.

Dabei weist vorteilhafterweise der Außenschenkel 5 jeder Gliedhälfte 2 an seiner Innenseite eine in eine Nut 4a am Innenschenkel 4 der jeweils anderen Gliedhälfte 2 eingreifende Feder 5a auf, und außerdem sind die Feder- und Nutverbindungen 8 zwischen den beiden Gliedhälften 2 des Kettenverbindungsgliedes 1 mit gegen die Außenseiten bzw. gegen die Bügelinnenseiten etwa kreisbogenförmig auslaufenden Endabschnitten 8a, 8b versehen.

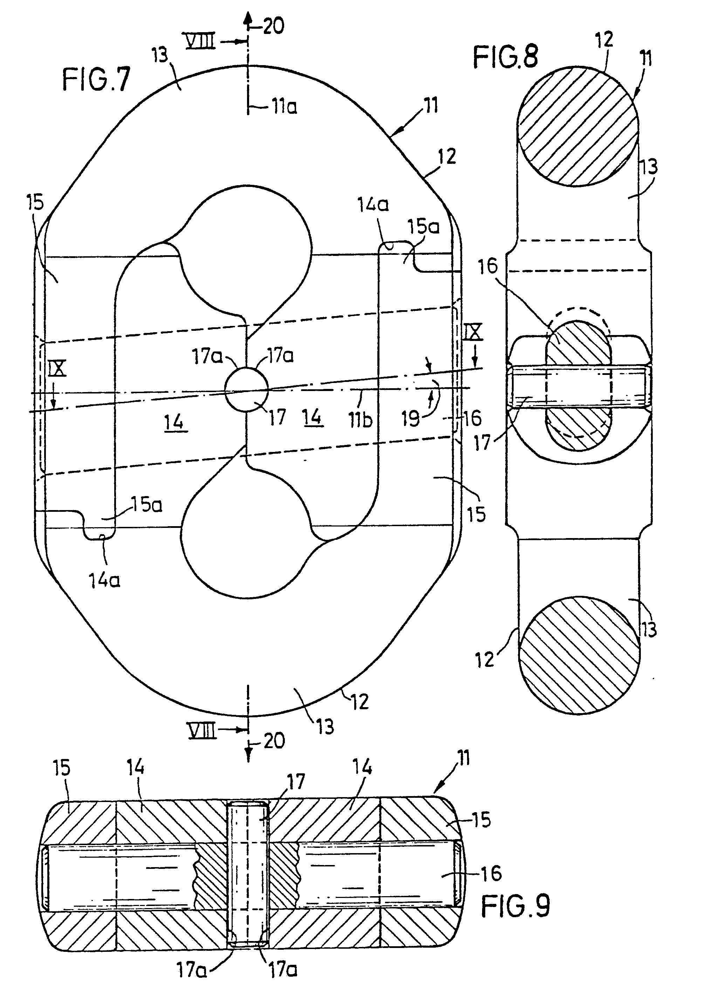

Wie in Fig. 7 bis 12 zu erkennen ist, hat auch das zweite Kettenverbindungsglied 11 zwei formschlüssig ineinandergreifende gleiche Gliedhälften 12, von denen jede aus einem Bügel 13 mit einem Innenschenkel 14 und einem dazu in Kettenzugrichtung 20 etwa parallelen Außenschenkel 15 besteht. Beide Gliedhälften 12 sind durch einen die ineinandergesteckten Außenschenkel 15 und Innenschenkel 14 durchsetzenden Verriegelungskeil 16 mit einem ovalen Querschnitt fest miteinander verbunden. Die Innenschenkel 14 beider Gliedhälften 12 liegen in der Längsmittelebene 11a des Kettenverbindungsgliedes 11 unmittelbar flach aneinander und nehmen zwischen sich einen den Verriegelungskeil 16 quer durchsetzenden Sicherungsstift 17 in den beiden Hälften 17a einer Querbohrung zwischen sich auf. Außerdem hat der Außenschenkel 15 jeder Gliedhälfte 12 eine in Kettenzugrichtung 20 gegen die andere Gliedhälfte 12 hervorspringende stegförmige Verriegelungsnase 15a zum Eingriff in eine gegenüberliegende Nut 14a an der anderen Gliedhälfte 12.

Wie in der Zeichnung weiterhin zu erkennen ist, ist der Verriegelungskeil 16 entgegen der Kettenzugrichtung 20 zu den Außenschenkeln 15 der beiden Gliedhälften 12 hin schräggestellt, wobei die Schrägstellung 19 des Verriegelungskeils 16 mindestens 3° gegenüber der Querachse 11b des Kettenverbindungsgliedes 11 beträgt.

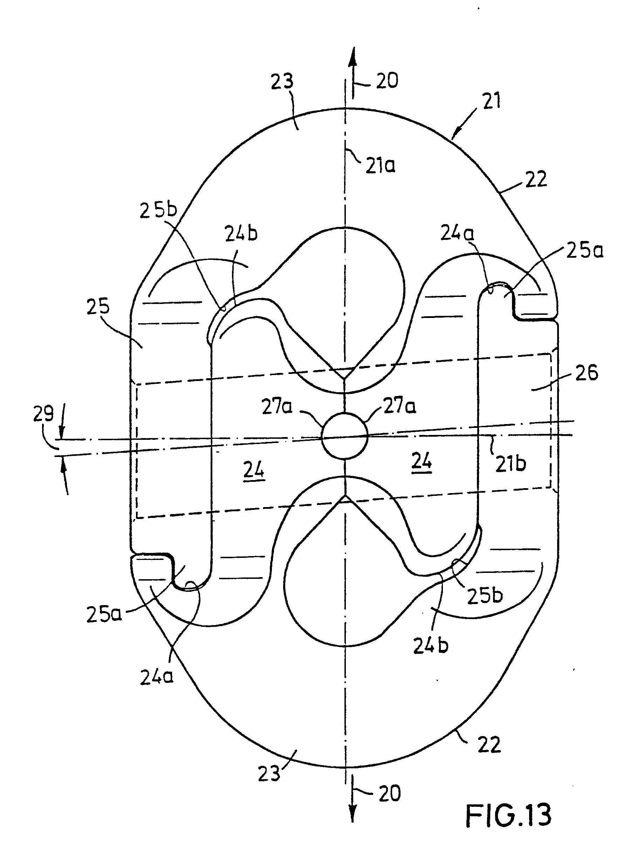

Ebenso wie bei den beiden ersten Kettenverbindungsgliedern 1, 11 hat auch das in Fig. 13 gezeigte dritte Kettenverbindungsglied 21 zwei formschlüssig ineinandergreifende gleiche Gliedhälften 22, von denen jede aus einem Bügel 23 mit einem Innenschenkel 24 und einem dazu in Kettenzugrichtung 20 etwa parallelen Außenschenkel 25 besteht. Beide Gliedhälften 22 sind durch einen die ineinandergesteckten Außenschenkel 25 und Innenschenkel 24 durchsetzenden Verriegelungskeil 26 mit einem ovalen Querschnitt fest miteinander verbunden. Die Innenschenkel 24 beider Gliedhälften liegen in der Längsmittelebene 21a des Kettenverbindungsgliedes 21 unmittelbar flach aneinander und nehmen zwischen sich einen den Verriegelungskeil 26 quer durchsetzenden Sicherungsstift 27 in den beiden Hälften 27a einer Querbohrung zwischen sich auf. Außerdem hat der Außenschenkel 25 jeder Gliedhälfte 22 eine in Kettenzugrichtung 20 gegen die andere Gliedhälfte 22 hervorspringende stegförmige Verriegelungsnase 25a zum Eingriff in eine gegenüberliegende Nut 24a an der anderen Gliedhälfte 22.

Wie in Fig. 13 weiterhin zu erkennen ist, ist auch der Verriegelungskeil 26 entgegen der Kettenzugrichtung 20 zu den Außenschenkeln 25 der beiden Gliedhälften 22 hin schräggestellt, wobei die Schrägstellung 29 des Verriegelungskeils 26 ebenso wie bei dem Ausführungsbeispiel von Fig. 7 bis 12 mindestens 3° gegenüber der Querachse 21b des Kettenverbindungsgliedes 21 beträgt.

Im Unterschied zu dem Ausführungsbeispiel von Fig. 7 bis 12 liegen bei dem Kettenverbindungsglied 21 von Fig. 13 die beiden Kettengliedhälften 22 am abgerundeten Auslaufende 24b des Innenschenkels 24 jedoch nicht unmittelbar am gegenüberliegenden Ausrundungsbereich des jeweiligen Außenschenkels 25 an, sondern es ist an dieser Stelle eine sichelförmige Aussparung 25b an der Innenseite des Außenschenkels 25 vorhanden, die in diesem hochbeanspruchten Übergangsbereich zu dem Bügel 23 eine unmittelbare Flächenpressung zwischen dem Innenschenkel 24 und dem Außenschenkel 25 der jeweils anderen Gliedhälfte 22 vermeidet. Die Gefahr eines Bruches wird dadurch auch an dieser Stelle weiter herabgesetzt.

**Patentansprüche**

1. Kettenverbindungsglied (1, 11, 21) für Rundstahlketten, insbesondere für im Bergbau einsetzbare Förder- oder Zugketten, mit zwei formschlüssig ineinandergreifenden gleichen Gliedhälften (2, 12, 22), jede bestehend aus einem Bügel (3, 13, 23) mit einem Innenschenkel (4, 14, 24) und einem dazu in Kettenzugrichtung etwa parallelen Außenschenkel (5, 15, 25) und einem die Außenschenkel und die Innenschenkel der beiden ineinandergesteckten Gliedhälften durchsetzenden Verriegelungskeil (6, 16, 26) mit einem ovalen Querschnitt, wobei die Innenschenkel beider Gliedhälften in Kettenzugrichtung bzw. parallel dazu unmittelbar aneinanderliegen und einen den Verriegelungskeil quer durchsetzenden Sicherungsstift (7, 17, 27) in den beiden Hälften einer Querbohrung zwischen sich aufnehmen, dadurch gekennzeichnet, daß der Verriegelungskeil (6, 16, 26) entgegen der Kettenzugrichtung (20) zu den Außenschenkeln (5, 15, 25) der beiden Gliedhälften (2, 12, 22) hin schräggestellt ist.

2. Kettenverbindungsglied nach Anspruch 1, dadurch gekennzeichnet, daß die Schrägstellung (9, 19, 29) des Verriegelungskeils (6, 16, 26) mindestens 3° gegenüber der Querachse (1b, 11b, 21b) des Kettenverbindungsgliedes (1, 11, 21) beträgt.

3. Kettenverbindungsglied nach Anspruch 1 und 2 , dadurch gekennzeichnet, daß die Schrägstellung (9, 19, 29) des Verriegelungskeils (6, 16, 26) zwischen etwa 5° und etwa 15° beträgt.

4. Kettenverbindungsglied nach Anspruch 1, dadurch gekennzeichnet, daß der Außenschenkel (5) jeder Gliedhälfte (2) und der daran anliegende Innenschenkel (4) der jeweils anderen Gliedhälfte (2) durch eine in der Ebene des Verriegelungskeils (6) im wesentlichen in Kettenzugrichtung (20) sich erstreckende Feder- und Nutverbindung (8) formschlüssig miteinander verbunden sind.

5. Kettenverbindungsglied nach Anspruch 4, dadurch gekennzeichnet, daß der Außenschenkel (5) jeder Gliedhälfte (2) an seiner Innenseite eine in eine Nut (4a) am Innenschenkel (4) der jeweils anderen Gliedhälfte (2) eingreifende Feder (5a) aufweist.

6. Kettenverbindungsglied nach Anspruch 4 oder 5, dadurch gekennzeichnet, daß die Feder- und Nutverbindungen (8) zwischen beiden Gliedhälften (2) mit gegen die Außenseiten und gegen die Bügelinnenseiten etwa kreisbogenförmig auslaufenden Endabschnitten (8a, 8b) ausgebildet sind.

7. Kettenverbindungsglied nach einem der Ansprüche 1 bis 3, dadurch gekennzeichnet, daß der Außenschenkel (15, 25) jeder Gliedhälfte (12, 22) eine in Kettenzugrichtung (20) gegen die andere Gliedhälfte (12, 22) hervorspringende stegförmige Verriegelungsnase (15a, 25a) zum Eingriff in eine gegenüberliegende Nut (14a, 24a) an der anderen Gliedhälfte (12, 22) aufweist.

8. Kettenverbindungsglied nach Anspruch 7, dadurch gekennzeichnet, daß zwischen dem abgerundeten Auslaufende (24b) des Innenschenkels (24) jeder Kettengliedhälfte (22) und dem gegenüberliegenden Ausrundungsbereich des jeweiligen Außenschenkels (25) der anderen Kettengliedhälfte eine sichelförmige Aussparung (25b) an der Innenseite des Außenschenkels (25) vorhanden ist, die eine unmittelbare Flächenpressung zwischen dem Innenschenkel (24) und dem Außenschenkel (25) der jeweils anderen Gliedhälfte (22) an diesem hochbeanspruchten Übergangsbereich zu dem Bügel (23) jeder Gliedhälfte (22) vermeidet.

**Claims**

1. A chain-connecting link (1, 11, 21) for round-section steel chains- particularly those used for conveying and pulling in mining operations, with two half-links (2, 12, 22) which interlock positively with each other; each consisting of a bend (3, 13, 23), an inner arm (4, 14, 24) and, positioned substantially parallel to this in the direction of chain pull, an outer arm (5, 15, 25); and with a locking wedge (6, 16, 26), oval in cross section and penetrating through the inner and outer arms of the two interlocked half-links; the inner arms of the two half-links resting in direct contact with each other in a plane extending in the direction of pull of the chain, or parallel thereto; a safety pin (7, 17, 27) penetrating transversely through the locking wedge and resting between the two halves of a transverse bore shared by the two inner arms, characterised in that the locking wedge (6, 16, 26) forms an angle with the direction of pull (20) of the chain and with the two outer arms (5, 15, 25) of the half-links (2, 12, 22).

2. Chain-connecting link as claimed in Claim 1, characterised in that the angle formed (9, 19, 29) by the locking wedge (6, 16, 26) with the transverse axis (1b, 11b, 21b) of the chain-connecting link (1, 11, 21) is at least 3° of angle.

3. Chain-connecting link as claimed in Claims 1 and 2, characterised in that the angle is approximately between 5° and 15° of angle.

4. Chain-connecting link as claimed in Claim 1, characterised in that each outer arm (5) is locked to the adjacent inner arm (4) of the other half-link (2) by a tongue-and-groove connection (8) extending substantially in the direction of chain pull (20).

5. Chain-connecting link as claimed in Claim 4, characterised in that the outer arm (5) of each half-link (2) has, projecting from its inner surface, a tongue (5a) which engages in a groove (4a) of the adjacent inner arm (4) of the other half-link (2).

6. Chain-connecting link as claimed in Claims 4 or 5, characterised in that the tongue-and-groove connections (8) between the two half-links (2) have approximately circularly curved outwards curving end-portions (8a, 8b).

7. Chain-connecting link as claimed in one of the Claims 1 to 3, characterised in that the outer arm (15, 25) of each half-link (12, 22) has a locking nose (15a, 25a) projecting, in the direction of chain pull (20), towards the other half-link (12, 22) and engaging in a groove (14a, 24a) in the other half-link (12, 22).

8. Chain-connecting link as claimed in Claim 7, characterised in that a crescent-shaped gap remains between the rounded elbow (24b) of each inner arm (24) and the rounded arm-pit (25b) of the adjacent outer arm (25) of the other half-link (22), in order to prevent the inner arm (24) from applying outwards pressure at this highly stressed location at the adjacent outer arm (25).

**Revendications**

1. Maillon de jonction (1, 11, 21) pour chaînes d'acier rond, en particulier pour chaînes transporteuses ou de traction utilisables dans l'exploitation des mines, comportant deux demi-maillons identiques (2, 12, 22) s'emboîtant l'un dans l'autre constitués chacun d'une pièce en U (3, 13, 23) ayant une branche intérieure (4, 14, 24) et une branche extérieure (5, 15, 25) à peu près parallèle à celle-ci dans la direction de traction de la chaîne, et une clavette de verrouillage (6, 16, 26) de section ovale qui traverse les branches extérieures et les branches intérieures des deux demi-maillons emboîtés l'un dans l'autre, les branches intérieures des deux demi-maillons étant appliquées l'une contre l'autre dans la direction de traction de la chaîne ou parallèlement à cette direction et recevant entre elles dans les deux moitiés d'un trou transversal situé entre elles une goupille de sécurité (7, 17, 27) qui traverse la clavette de verrouillage, caractérisé par le fait que la clavette de verrouillage (6, 16, 26) est inclinée à l'opposé de la direction (20) de traction de la chaîne vers les branches extérieures (5, 15, 25) des deux demi-maillons (2, 12, 22).

2. Maillon de jonction selon la revendication 1, caractérisé par le fait que l'inclinaison (9, 19, 29) de la clavette de verrouillage (6, 16, 26) par rapport à l'axe transversal (1b, 11b, 21b) du maillon de jonction (1, 11, 21) est d'au moins 3°.

3. Maillon de jonction selon les revendications 1 et 2, caractérisé par le fait que l'inclinaison (9, 19, 29) de la clavette de verrouillage (6, 16, 26) est comprise entre environ 5° et environ 15°.

4. Maillon de jonction selon la revendication 1, caractérisé par le fait que la branche extérieure (5) de chaque demi-maillon (2) et la branche intérieure (4) appliquée contre elle de l'autre demi-maillon (2) sont jointes par un joint à rainure et languette (8) s'étendant dans le plan de la clavette de verrouillage (6) sensiblement dans la direction (20) de traction de la chaîne.

5. Maillon de jonction selon la revendication 4, caractérisé par le fait que la branche extérieure (5) de chaque demi-maillon (2) présente sur son côté intérieur une languette (5a) qui s'engage dans une rainure (4a) de la branche intérieure (4) de l'autre demi-maillon (2).

6. Maillon de jonction selon l'une des revendications 4 et 5, caractérisé par le fait que les joints à rainure et languette (8) entre les deux demi-maillons (2) sont pourvus de parties d'extrémité (8a, 8b) qui se terminent à peu près en arc de cercle contre les côtés extérieurs et contre les côtés intérieurs des pièces en U.

7. Maillon de jonction selon l'une des revendications 1 à 3, caractérisé par le fait que la branche extérieure (15, 25) de chaque demi-maillon (12, 22) présente un ergot de verrouillage en forme de nervure (15a, 25a) qui saille vers l'autre demi-maillon (12, 22) dans la direction (20) de traction de la chaîne et s'engage dans une rainure opposée (14a, 24a) de l'autre demi-maillon (12, 22).

8. Maillon de jonction selon la revendication 7, caractérisé par le fait qu'entre l'extrémité arrondie (24b) de la branche intérieure (24) de chaque demi-maillon (22) et la partie arrondie opposée de la branche extérieure (25) de l'autre demi-maillon existe sur le côté intérieur de la branche extérieure (25) un évidement en forme de croissant (25b) qui évite une pression de contact entre la branche intérieure (24) et la branche extérieure (25) de l'autre demi-maillon (22) dans cette zone de jonction à la pièce en U (23) de chaque demi-maillon (22), qui est soumise à de gros efforts.

FIG.1
FIG.2
FIG.3
20
II
1
3
1a
2
8a
8
4a,5a
5
8b
III
9
7a
7a
4
I
7
1b
6
4
8b
4a,5a
5
8
8a
4a,5a
2
3
6
7
3

FIG.4
3
2
5
5a
4a
V
4
VI
VI
7a
4a
5a
FIG.5
3
2
4a
4
7a
7a
4a
5
5a

5
3
7a
2
4
4a
5a
FIG.6

FIG.7
FIG.8
FIG.9
VIII
IX
20
11
11a
11b
12
13
14
14a
15
15a
16
17
17a
19

FIG.10
13
12
XI
15
14a
14
17a
XII
XII
15a
FIG.11
13
12
17
15
15a
15
13
17a
12
14
FIG.12
17a
14a

20
23
21
21a
22
25b
24b
24a
25a
25
26
27a
27a
29
21b
24
24
25a
25b
24a
24b
22
23
20

FIG.13